# EUROPEAN PATENT APPLICATION

(11) **EP 4 631 589 A1**
(43) Date of publication of application: **15.10.2025**
(21) Application number: 24386043.4
(22) Date of filing: 10.04.2024
(51) Int. Cl.: A63F 13/45, A63F 13/54

(54) **SYSTEMS AND METHODS FOR DYNAMIC MODIFICATION OF GAME CHARACTER VOICE**

(71) Applicant: Sony Interactive Entertainment Inc., Tokyo 108-0075 (JP)
(72) Inventor: Michailidis, Lazaros, London W1F 7LP (GB)
(74) Representative: D Young & Co LLP

(57) **Abstract**

A method for dynamically modifying voices of a game character. The method comprises the step of loading voice data of the game character; partitioning the voice data into windows of audio signal; estimating context of game character states; generating audio signal based on an upcoming window of audio signal and the estimated context; and playing the generated audio signal in lieu of the upcoming window of audio signal.

## Description

### BACKGROUND OF THE INVENTION

### Field of the_invention

The present invention relates to systems and methods for dynamically modifying voices of video game characters.

### Description of the Prior Art

Animations in video games are a key part of game engagement. Similarly, voice in video games is a key part of who users engage with in a game. However, together, animations and voice require synchronization to maintain this engagement.

This can be difficult to do when voices are pre-recorded, but the game action these voices accompany is variable - and this is increasingly the case as games become more complex in terms of variability of game state, and/or rely more upon physics, simulation, or procedural generation, to produce unscripted and/or emergent game states or behaviours in operation.

The present invention seeks to mitigate or alleviate some or all of the above-mentioned problems.

### SUMMARY OF THE INVENTION

Various aspects and features of the present invention are defined in the appended claims and within the text of the accompanying description.

In a first aspect, a method for dynamically modifying game character voices is provided in accordance with claim 1.

In another aspect, an information processing apparatus for dynamically modifying game character voices is provided in accordance with claim 13.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a video game system in accordance with embodiments of the present application;
- Figure 2 is a schematic diagram of an entertainment device in accordance with embodiments of the present application;
- Figure 3 is an audio modification unit for dynamically modifying game character voices in accordance with embodiments of the present application;
- Figure 4 is a generative neural network for generating modified audio signals in accordance with embodiments of the present application;
- Figure 5 is an example scenario of joint animation analysis in accordance with embodiments of the present application;
- Figure 6 is an example scenario of dynamically modifying game character voices in accordance with embodiments of the present application; and
- Figure 7 is a flow diagram of dynamically modifying game character voices in accordance with embodiments of the present application.

### DESCRIPTION OF THE EMBODIMENTS

A video game system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Embodiments of the present description are applicable to a video game system involving a video game console, a development kit for such a system, or a video game system using dedicated hardware or a computer and suitable controllers. In the present application terms such as 'user' and 'player'; 'voice' and 'speech'; 'dialogue' and 'conversation'; 'accent', 'intonation', 'tone' and 'articulation', may be used interchangeably except where indicated otherwise.

As noted above, animations and voice benefit from synchronization to maintain user engagement and immersion in a game. Nevertheless, conventional arrangements to address this tend to suffer from one or more of a multiplicity of drawbacks:
Many games do not have a context-aware mechanism in place to blend their set of pre-recorded vocal lines that make up a cinematic cut-scene or narrative elements during gameplay. Because the voice acted lines are pre-recorded, they may be played during gameplay without the voices matching what the characters are doing. For example, a very relaxed voice might be heard even though the character is seen running.

Scenarios that require dynamically modifying game character voices include where characters are heard speaking while the player is exploring the environment, or where the player is actively controlling such a character to perform various actions. In another example, where multiple characters that the player is controlling simultaneously or interacting with carry out a dialog amongst each other (e.g. in a team command scenario), it is desirable that a dialog having prosodic elements with affective connotations (e.g., surprise), reflects whether the characters are for example resting, attacking, or running.

In other words, the tone or emotion conveyed in a pre-recorded line of dialogue may not reflect the actions of the character who notionally utters that line, for example in terms or urgency, effort, or the like. The actual content of the dialogue is a separate issue.

Embodiments of the present description allow enhancement of character speech with voice effects such as grunts and artificial pauses that inherit the visual effort that the characters exert when fighting or performing specific actions in the game. For example, the playing of a neutral voice when the character is visibly struggling in combat can break the illusion of presence in the virtual world and therefore adding a voice effect that reflects the troubled state of the character is desired. In another example of a running character, the voice of the character can also be enhanced with panting and artificial pauses to make the speech context-compliant with the visual action of running. Embodiments of the present description aims to provide improved auditory realism to the voice of the game characters, by using context and action recognition as part of the workflow for speech generation. Embodiments of the present description are premised on the modification of in-game speech in accordance with the context and action of the character.

An audio processing system according to embodiments of the present description can actively modify an audio signal related to a character speech on the fly to better reflect the context of the game. It aims to deliver a congruent audio-visual depiction by bridging the static narrative elements with the dynamic game action as conveyed through visual character animation.

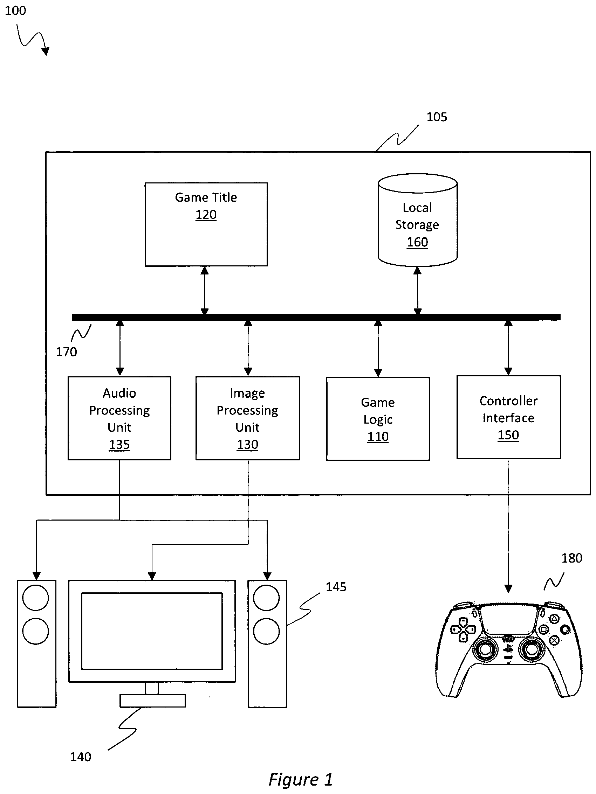

For the purposes of explanation and referring now to the drawings, wherein like reference numerals designate identical or corresponding parts throughout the several views, Figure 1 illustrates a schematic diagram of a video game system 100 in accordance with embodiments of the present application. The video game system 100 may comprise a game console 105, a display device 140, a speaker system 145, and a game controller 180. In some cases such as for example portable game consoles, the display device 140, speaker system 145 and game controller 180 may be integral to the video game system 100.

According to embodiments of the present application, the video game system 100 provides a user interface on a game controller 180 which allows the user to input information to the game consoler. According to embodiments of the present application, the game controller 180 contains multiple input devices such as buttons and joysticks.

Referring to the video game system 100 in Figure 1, the game console 105 comprises a game logic 110, a game title database 120, an image processing unit 130, an audio processing unit 135, a game controller interface 150, and a local storage 160 (which may also hold the database 120). The components of the game console 105 are connected via a bus 170.

When gameplay is initiated, the game console 105 accesses the game title database 120 and loads game data to initiate interactive gameplay. For example, the game logic 110 executes game code loaded from the game content storage 124 of the game title database 120, in order to generate the game environment which interacts with the player character. The game logic 110 may also load user save data and/or user settings stored in local storage 160. The user may interact with the game, for example to control a player character, by operating the game controller 180, and the game logic 110 processes the input signals received from the game controller via the game controller interface 150.

The image processing unit 130 renders computer graphics for the game environment and current game state generated by the game logic 110. The image processing unit 130 then generates video signals for the game graphics, such as the game environment based on the player's perspective, and transmits the video signals to the display device 140.

Additionally, the audio processing unit 135 retrieves sound files and music files from the game title database 120 corresponding to the game environment and current state generated by the game logic 110, then decompresses and decodes the files into audio signals for output to the speaker system 145 to produce background music, character speech, audio tracks, sound effects of the game environment and the like.

Further, the controller interface 150 optionally generates haptic feedback effects such as vibration on the game controllers 180 based on the game environment and current state generated by the game logic 110.

According to embodiments of the present application, the audio processing unit 135 further modifies the voice of game characters with vocal effects based on the state of the game character in order to enrich audio quality of the character voice. Accordingly, a more engaging and immersive gaming experience can be provided.

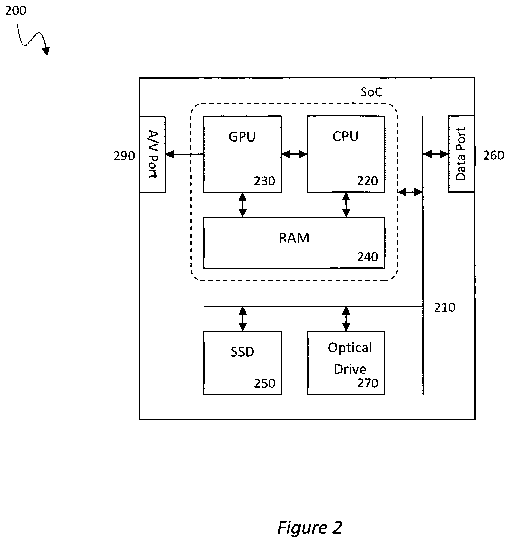

Further details of the video game console 105 will be described with reference to Figure 2.

Figure 2 illustrates a schematic diagram of an entertainment device in accordance with embodiments of the present application. The entertainment device comprises a central processor 220. The entertainment device also comprises a graphical processing unit or GPU 230. The GPU can be physically separate to the CPU, or integrated with the CPU as a system on a chip (SoC) as in the PS5.

The entertainment device also comprises RAM 240, and may either have separate RAM for each of the CPU and GPU, or shared RAM. The or each RAM can be physically separate, or integrated as part of an SoC. Further storage is provided by a disk 250.

The entertainment device may transmit or receive data via one or more data ports 260. It may also optionally receive data via an optical drive 270. Interaction with the system is typically provided using one or more handheld controllers 280.

Audio/visual outputs from the entertainment device are typically provided through one or more A/V ports 290, or through one or more of the wired or wireless data ports 260.

Where components are not integrated, they may be connected as appropriate either by a dedicated data link or via a bus 210.

Such an entertainment device may be used as a game console 105 in a video game system 100 to generate game character voice which is modified based on the state of the game and/or character. It will be appreciated that this is a non-limiting example and that as noted previously herein other examples of a game console may include a phone or smart television.

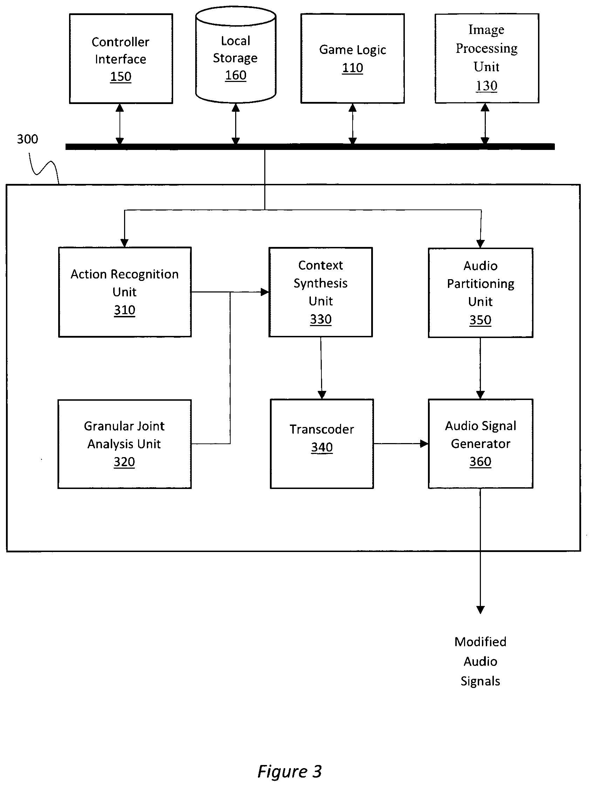

Figure 3 illustrates a schematic diagram of an audio modification unit 300 for dynamically modifying game character voices in accordance with embodiments of the present description. The audio modification unit 300 may be implemented as a separate processing circuitry contained in the game console 105, or integrated with other components, such as the game logic 110 or audio processing unit 135. In embodiments of the present description, the audio modification unit 300 may comprise an action recognition unit 310, a granular joint analysis unit 320, a context estimation unit 330, a transcoder 340, an audio partitioning unit 350 and an audio signal generator 360.

In embodiments, the action recognition unit 310 performs action recognition through acquiring developer data that keeps track of all states of the game character. The developer data may be provided by the game logic 110 during the execution of the game and may include the states and actions of the game character, such as being idle, walking, running, jumping, attacking, suffering illness or poisoning. These states may be associated for example with related character animations, facial expressions, and/or changes to character values like health. In some embodiments, the action recognition unit 310 may recognize character actions through user-issued command flows such as pressing buttons for run or jump, or sequences of such buttons. The sequence of user-issued commands may be acquired from the controller interface 150 or the game logic 110. For example, when the user inputs commands that correspond to a running action, such as by pressing a certain key or a certain combination of keys on the game controller 180, the action recognition unit 310 may determine that the game character is in a running state. In a further example, if the user enters a series command at a high frequency, such as a key press on the game controller 180 corresponding to wielding a weapon, the action recognition unit 310 may determine that the character is actively engaging in a battle.

In some embodiments, the action recognition unit 310 may recognize character actions through event propagation protocols, which control the mechanisms by which events are processed and propagated throughout the game system. The event propagation protocols handle player feedback and in-game interactions in the game world. It can be determined from information of the event propagation protocols the action of a game character, for example, whether a character has started the effect of an ability, a character has started running, or a character is attacking. In embodiments, information of the event propagation protocols may be accessed from the game logic 110 during the execution of the game. It will appreciated therefore that more generally the action recognition unit 310 may recognize character actions through in-game representations of in-game events.

It will be appreciated that one or more such mechanisms for determining the game/character state can be used, and where a plurality of mechanism are used, this can either be to complement each other (e.g. where a particular state is only discernible, or more finely discernible, through one source of data), or to reinforce each other (for example where a jump command has been issued, but the game environment indicates whether the player is jumping over a low wall or a pit of crocodiles, which may affect the player character's notional state in a way that affects speech).

According to embodiments of the present description, the action recognition unit 310 may recognize character actions by utilizing a sequence of game frames to extract and recognize what action a character is performing based on the animation. The game frames are snapshots of the game character taken during the game. This can be of particular use when a character animation is at least in part driven by simulation, but is not exclusive to this use case. By performing image recognition on the snapshots, action recognition unit 310 may determine the actions being performed by the character. Alternatively or in addition, skeletal model data of the player character or the like may be analysed to similarly determine the actions In embodiments, information of games frames may be obtained from the game logic 110 or the image processing unit 130 during the execution of the game.

After recognizing the character states and actions, either through animation analysis or any of the other techniques mentioned herein, the action recognition unit 310 provides the recognition results to the context estimation unit 330, which then dynamically generates the type of audio enhancement based on the character states and type of actions. In particular, the context estimation unit 330 may determine voice effects such as grunt, panting, pause, increase of volume, and change of tone to illustrate a different emotion, that will be added during the synthesis / modification of the character speech. In some embodiments, apart from character states and actions, the context estimation unit 330 may also take into account preferences of the player previously entered at the game configuration or game character creation stage. These may include the level of explicit violence, censorship or filtering configuration, parental controls, as well as the attributes, personality or backstory of the game character chosen by the player. In embodiments, information of game configuration and game character creation may be obtained from the game logic 110 or the local storage 160.

According to embodiments of the present description, optionally the transcoder 340 next transcodes the context generated by the context estimation unit 330 into text representation or some other form of predetermined representation. The transcoding may be performed through known techniques, such as word embedding. Transcoding of the context information allows extraction of structured data for optional further processing in the audio signal generation stage. This can be of help when the context based on the game/character states and actions are complex, but in principle the context can be used whether transcoded or not.

Game character speeches in video games are usually performed by voice actors and pre-recorded. The voice recordings are integrated into the game engine as audio clips. The audio clips corresponding to respective lines of dialogue are played back during game execution based on specific triggers or events in the game, such as scripted sequences, player feedback, and character interactions. According to embodiments of the present description, the audio partitioning unit 350 partitions the audio signal in relation to a character speech into short-length windows of several audio frames. The continuous stream of recorded speech signal is segmented into smaller units using known speech recognition techniques based on acoustic or linguistic properties of the speech. Hence the window of audio frames may be of fixed or varied length, but typically corresponds to phoneme or word lengths. The segmentation of character speech is advantageous as it enables perceptual changes in the speech prosody during the speech generation stage. It will be appreciated that this segmentation can be done in advance (e.g. before distribution of the data, and included with it), or during other periods of the game (for example when loading a level, or when the game is paused, or when using a map etc.). Typically it only needs to be done once.

Hence a videogame may comprise game execution data, audio asset data including voice data, and also voice partitioning data indicating windows of audio signal operable to be modified in response to a game character state during execution of the game.

According to embodiments of the present description, the audio signal generator 360 receives from the audio partitioning unit 350 the upcoming partitioned audio clips corresponding to each segment of a character speech, and generates a new audio signal, based on the context (e.g. character states and actions), optionally as transcoded by the transcoder 340.

According to embodiments of the present description, the context, either direct or from the transcoder 340, and the audio signal of the upcoming audio segment from the audio partitioning unit 350 are fed into a generative neural network in the audio signal generator 360. The generative neural network modifies the original signal to reflect the context in relation to the current game state, the character state and action. Specifically, during the playback of the speech audio signal, each subsequent window is dynamically evaluated against the context generated by the context estimation module 330 or the transcoded context produced by the transcoder 340. As such, the action does not consistently produce, for example, a grunt throughout the audio clip of the whole speech, because the visual animation may suggest that the effort expended during an attack will peak while lifting the weapon against an enemy and/or upon impact. Instead, the voice effect is applied only to the relevant partition of the character speech.

According to embodiments of the present description, the upcoming pre-recorded segmented audio window is replaced with the modified audio signals synthesized by the audio signal generator 360 to illustrate the character state and action. The modified audio signals are provided to the audio processing unit 135 and subsequently the external speaker system 145 for playback.

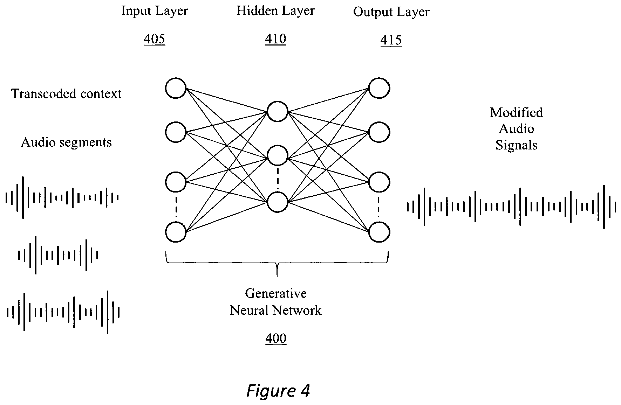

Figure 4 illustrates a generative neural network model 400 for generating modified audio signals in accordance with embodiments of the present application. In embodiments, the generative neural network 400 comprises an input layer of nodes 405, a hidden layer of nodes 410, and an output layer of nodes 415. Although one hidden layer is shown in Figure 4, it is envisaged that the neural network may include a number of hidden layers.

In embodiments, the generative neural network model 400 is pre-trained during game development stage by feeding a training dataset containing transcoded context and audio segments of character speech. The training may be performed by using a known supervised learning approach, in which the objective of the training is to minimize the discrepancy between the generated speech and the target speech in the training dataset. During game execution, the audio segments partitioned by the audio partitioning unit 350 and the transcoded context from transcoder 340 are fed into the trained generative neural network model 400 to synthesise modified audio signals for character speech that reflects the context of the character state and action.

Alternatively or in addition to the use of a generative neural network to synthesise a replacement, the upcoming audio segment can be modified using rules or heuristics based on the context, either directly or from the transcoder 340. In this case, grunts, pauses and the like can be inserted into the audio playback according to these rules/heuristics, and similarly tonal changes, stresses and the like can be obtained by warping the audio e.g. using wavelet processing or the like.

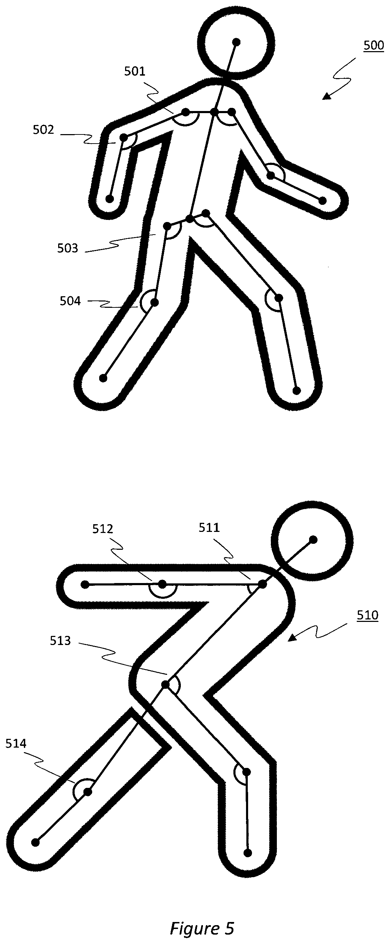

Figure 5 is an example scenario of joint animation analysis in accordance with embodiments of the present application. In embodiments, the action recognition unit 310 additionally performs granular joint animation analysis to determine what stage the visual animation is, and how the transformation of the joints has evolved within the last few windows of the audio signal. As noted previously herein, this may be based upon an image analysis and/or skeleton/mesh data within the game.

This is advantageous because significant changes to the 3D positional and/or rotational vectors of the joints may indicate higher "effort". This effort can then be used as a marker for whether a prosodic element should be added in the upcoming window of the audio signal. The angular speed of the joints are added to the feature space for later processing, such as serving as a basis for generating action context by the context estimation unit. For example, by analysing the movements and interactions of individual joints 501-504 in the skeletal animation of the character 500, the action recognition unit 310 may obtain insights into the character's action, such as performing a walking action. In a further example, based on the positional and/or rotational vectors of the joints 511-514 in character 510, the action recognition unit 310 may identify the key-frame that represents key moments or transitions in the character's action, such as a crouch start for running. In embodiments, the character may share the same configuration for the skeletal rig based on a known animation system, such as Unity's Mecanim. It will also be appreciated for example that points of inflexion in the motion of joints (for example when a punch action stops, or a jump action starts or peaks) can indicate when to punctuate speech with grunts, stresses, tonal changes and the like. It will also be appreciated that alternatively or in addition changes in posture can indicate changes in character state.

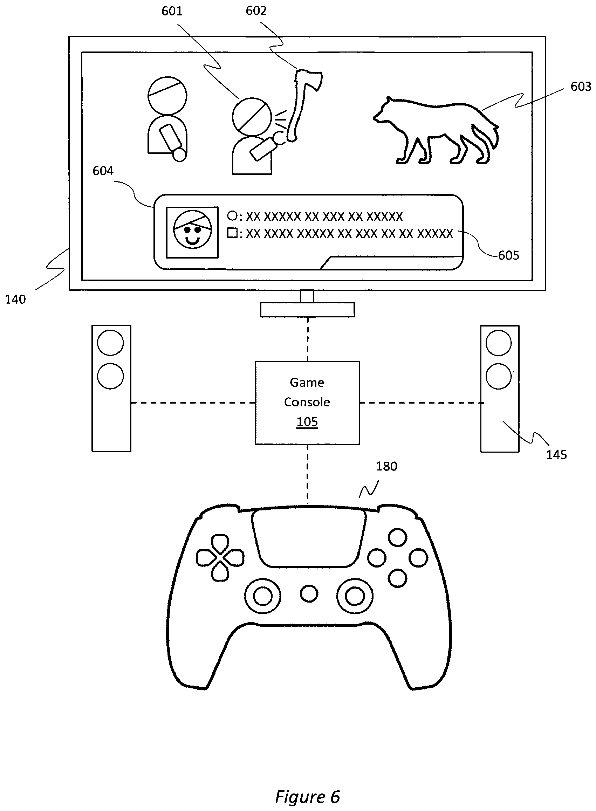

Figure 6 is an example scenario of dynamically modifying game character voices in accordance with embodiments of the present application. The example scenario describes the display device 140 showing a video game content generated by the game console 105, in which a player character 601 in a role-playing game is fighting a monster 603 with a weapon 602. In this example, the game console 105 also generates a graphical user interface containing a dialogue window 604. The dialogue window 604 displays the dialogue text and provides choices of response 605 for the player to interact with a team character. Once the player selects the desired choice of response, the game logic 110 loads the corresponding audio clip and sends the same to the audio modification unit 300. Alternatively, the dialogue may be event driven or scripted, rather than a user selection via a UI. The audio partitioning unit 350 of the audio modification unit 300 analyses the speech signals and partitions the speech into audio segments, if this has not already been done. At the same time, the action recognition unit 310 of the audio modification unit 300 recognizes that the player character 601 is attacking the monster 603 with the weapon 602, based on mechanisms described above with reference to Figures 3 and 5. The context of the player character's action is then optionally transcoded into a predetermined representation by the transcoder 340. Based on the audio segments from the audio partitioning unit 350 and the direct and/or transcoded context, the audio signal generator 360 synthesizes or modifies audio signals with a grunt voice effect applied to the relevant partitions of the character speech during the attacking action, for example, the moment of lifting the weapon and wielding it towards the monster. Alternatively, the audio signal generator 360 may synthesise or modify the audio signal to add stress (e.g. a volume envelope, and optionally a pitch envelope) to a particular spoken syllable that coincides with the action.

Although Figure 6 shows only modifying the speech of the player character, it is envisaged that embodiments of the present application are applicable to modify the speech of other game characters, including characters controlled by other players in a multiplayer game, or non-playable character (NPC) characters, and any other game character that is engaged in a dialogue.

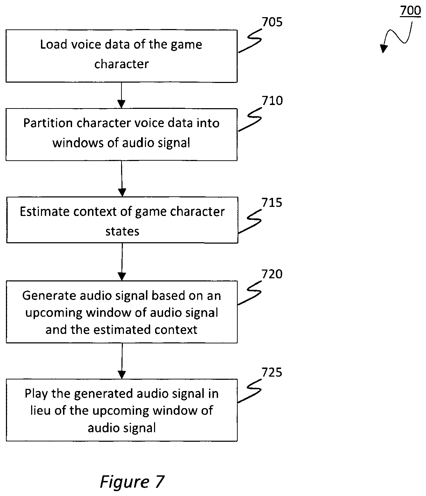

Figure 7 shows a flow diagram describing a computerized process 700 of dynamically modifying game character voices in accordance with embodiments of the present application. Process 700 may begin at step 705, where the game logic loads voice data of the game character in response to input by the player or game character interaction during the gameplay. The process then moves to step 710 where the character voice data is partitioned into windows of audio signal. As noted elsewhere herein, this may be done in advance, and so this step may equally comprise accessing existing partition data. The process then proceeds to step 715 where a context of game character states is estimated based on factors including character actions, status, and game progress. At step 720, an audio signal is generated (e.g. synthesised or modified) based on an upcoming window of audio signal and the estimated context.

Finally at step 725, the generated audio signal is played back in lieu of the upcoming window of audio signal.

It will be appreciated that the above methods may be carried out on conventional hardware suitably adapted as applicable by software instruction (e.g. game console 105) or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence in a summary embodiment of the present description, an information processing apparatus comprises the following.

Firstly, a game execution module (e.g.: game logic 110) is configured (for example by suitable software instruction) to load voice data of the game character, as described elsewhere herein.

Secondly, a processing module (e.g.: audio modifying unit 300) is configured (for example by suitable software instruction) to partition the voice data into windows of audio signal, estimating context of game character states; and generate audio signal based on an upcoming window of audio signal and the estimated context, as described elsewhere herein.

Thirdly, an audio playback module (e.g.: speaker system 145) is configured (for example by suitable software instruction) to play the generated audio signal in lieu of the upcoming window of audio signal, as described elsewhere herein.

It will be apparent to a person skilled in the art that variations in the above system corresponding to the various embodiments of the method as described and claimed herein are considered within the scope of the present invention, including but not limited to that:
- In an instance of the summary embodiment, the step of estimating context of game character states comprises acquiring developer data with character states, as described elsewhere herein;
- In an instance of the summary embodiment, the step of estimating context of game character states comprises determining user-issued command flows, as described elsewhere herein;
- In an instance of the summary embodiment, the step of estimating context of game character states comprises analyzing in-game events, as described elsewhere herein;
- In an instance of the summary embodiment, the step of estimating context of game character states comprises extracting and recognizing character states from a sequence of game frames, as described elsewhere herein;
- In an instance of the summary embodiment, the step of estimating context of game character states comprises obtaining stage information of joint animation of the character, as described elsewhere herein;
- In an instance of the summary embodiment, the method comprises analyzing the transformation of the joints within the a plurality of previous windows of audio signal, as described elsewhere herein;
- In an instance of the summary embodiment, the method comprises analyzing parameters selecting from a group consisting of angular speed, 3D positional vectors and rotational vectors of the joints., as described elsewhere herein;
- In an instance of the summary embodiment, the step of estimating context of game character states comprises: transcoding context of game character states into text representation, as described elsewhere herein;
- In an instance of the summary embodiment, the step of generating audio signal comprises feeding the upcoming window of audio signal and the estimated context into a generative neural network, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method for dynamically modifying voices of a game character, comprising the steps of:
loading voice data of the game character;
partitioning the voice data into windows of audio signal;
estimating a context of one or more game character states;
generating audio signal based on an upcoming window of audio signal and the estimated context; and
outputting the generated audio signal in lieu of the upcoming window of audio signal.

2. The method for dynamically modifying voices of a game character according to claim 1, wherein the step of estimating context of one or more game character states comprises acquiring developer data specifying character states.

3. The method for dynamically modifying voices of a game character according to claim 1 or claim 2, wherein the step of estimating context of one or more game character states comprises determining user-issued commands.

4. The method for dynamically modifying voices of a game character according to any preceding claim, wherein the step of estimating context of one or more game character states comprises analyzing in-game events.

5. The method for dynamically modifying voices of a game character according to any preceding claim, wherein the step of estimating context of one or more game character states comprises extracting and recognizing character states from a sequence of game frames.

6. The method for dynamically modifying voices of a game character according to any preceding claim, wherein the step of estimating context of one or more game character states comprises obtaining stage information of joint animation of the character.

7. The method for dynamically modifying voices of a game character according to claim 6, further comprising analyzing the transformation of the joints within the a plurality of previous windows of audio signal.

8. The method for dynamically modifying voices of a game character according to claim 7, further comprising analyzing parameters selecting from a group consisting of angular speed, 3D positional vectors, and rotational vectors of the joints.

9. The method for dynamically modifying voices of a game character according to any preceding claim, wherein the step of estimating context of one or more game character states comprises: transcoding context of one or more game character states into a predetermined representation.

10. The method for dynamically modifying voices of a game character according to any preceding claim, wherein the step of generating audio signal comprises feeding the upcoming window of audio signal and the estimated context into a generative neural network.

11. The method for dynamically modifying voices of a game character according to any preceding claim, wherein the step of generating audio signal comprises modifying the upcoming window of audio according to rules or heuristics responsive to the estimated context.

12. A computer program comprising computer executable instructions adapted to cause a computer system to perform the method of any one of the preceding claims.

13. An information processing apparatus for dynamically modifying voices of a game character, comprising:
means for loading voice data of the game character;
means for partitioning the voice data into windows of audio signal;
means for estimating context of game character states;
means for generating audio signal based on an upcoming window of audio signal and the estimated context; and
means for outputting the generated audio signal in lieu of the upcoming window of audio signal.

14. A videogame console, comprising:
an information processing apparatus according to claim 13.

15. A videogame, comprising:
game execution data;
audio asset data including voice data;
voice partitioning data indicating windows of audio signal operable to be modified in response to a game character state during execution of the game.
